# EUROPEAN PATENT APPLICATION

(11) **EP 4 407 932 A1**
(43) Date of publication of application: **31.07.2024**
(21) Application number: 23153411.6
(22) Date of filing: 26.01.2023
(51) Int. Cl.: H04L 9/40, H04L 47/125, H04L 12/46, H04L 47/24

(54) **METHOD AND SYSTEM FOR SHIP-SHORE PACKET DATA TRANSMISSION**

(71) Applicant: Rohde & Schwarz GmbH & Co. KG, 81671 München (DE)
(72) Inventor: Heuck, Christoph, 22851 Norderstedt (DE)
(74) Representative: Rupp, Christian

(57) **Abstract**

Disclosed are a method (1) and a corresponding system (2) for ship-shore packet data transmission. The method (1) comprises: establishing (11) a plurality of ship-shore packet data transmission connections (3) between off-shore and on-shore transceiver devices (21, 22); establishing (12) a plurality of mutually independent ship-shore packet data transmission tunnels (4) in accordance with a plurality of traffic classes of the packet data transmission; configuring (13) a load balancing for the plurality of packet data transmission tunnels (4) across the plurality of packet data transmission connections (3); performing (14) the packet data transmission over the plurality of packet data transmission tunnels (4) in accordance with the configured load balancing; and reconfiguring (15) the packet data transmission in response to changing transmission conditions over the plurality of packet data transmission connections (3).

## Description

### Technical Field

The present disclosure relates to a maritime mobile service, and in particular to a method and a system for ship-shore packet data transmission.

### Background Art

Ships (i.e., surface vessels) typically feature a variety of Internet Protocol (IP) based wireless transmission systems for ship-shore communication. Additionally, ships may have transmission systems for ship-ship communication offering the ability to communicate directly within a federation in a line-of-sight manner.

The ship-shore communication may suffer from various issues:
Changing network state (i.e., available paths and path costs) on the ends of a packet data transmission system may at least temporarily lead to different routing decisions,.

Providing a crypto tunnel (e.g., IPSEC tunnel) for various classified services prevents recognition of attached QoS tags of inserted traffic flows belonging to different services and in turn load balancing and priorization of classified services in an unclassified security domain as necessary is not possible. Given limited transmission capacity for IP based traffic on vessels, classified services with high QoS requirements may especially be affected. Additionally, an automatic handover between transmission systems for a considered Service and its QoS needs cannot be supported in known systems. Given crypto tunnels are typically based on IPSEC over UDP to get through minimally featured NAT devices, so that TCP Enhancement is unattainable.

### Summary

In view of the above-mentioned drawbacks and limitations, the present disclosure aims to improve a packet data transmission for a maritime mobile service in terms of its load balancing, QoS differentiation, and TCP Enhancement capabilities.

The objective is achieved by the embodiments as defined by the appended independent claims. Preferred embodiments are set forth in the dependent claims and in the following description and drawings.

A first aspect of the present disclosure relates to a method for ship-shore packet data transmission. The method comprises establishing a plurality of ship-shore packet data transmission connections between off-shore transceiver devices and on-shore transceiver devices; establishing a plurality of mutually independent ship-shore packet data transmission tunnels in accordance with a plurality of traffic classes of the packet data transmission; configuring a load balancing for the plurality of packet data transmission tunnels across the plurality of packet data transmission connections; performing the packet data transmission over the plurality of packet data transmission tunnels in accordance with the configured load balancing; and reconfiguring the packet data transmission in response to changing transmission conditions over the plurality of packet data transmission connections.

The configuring of the load balancing may comprise configuring the load balancing for the plurality of packet data transmission tunnels across the plurality of packet data transmission connections in accordance with predetermined rules.

The configuring of the load balancing may comprise synchronously configuring the load balancing for the respective packet data transmission tunnel across the plurality of packet data transmission connections.

The predetermined rules may take account of one or more of: quality of service, QoS, requirements of the plurality of traffic classes of the packet data transmission, and QoS metrics of the plurality of packet data transmission connections.

The QoS requirements of the plurality of traffic classes of the packet data transmission may comprise one or more of: a maximum delay or latency of the respective traffic class, a maximum delay variation or jitter of the respective traffic class, an average bitrate of the respective traffic class, a maximum bitrate of the respective traffic class, and a total quantity of the plurality of traffic classes.

The QoS metrics of the plurality of packet data transmission connections may comprise one or more of: a maximum delay or latency of the respective packet data transmission connection; a maximum delay variation or jitter of the respective packet data transmission connection; an average bitrate of the respective packet data transmission connection; a maximum bitrate of the respective packet data transmission connection; and a total bitrate of the respective set of packet data transmission connections.

The performing of the packet data transmission may comprise classifying the packet data transmission in accordance with the plurality of traffic classes by means of packet inspection.

The plurality of traffic classes of the packet data transmission may comprise two or more of: expedite forwarding (EF), assured forwarding (AF), best effort (BE), and scavenger.

The performing of the packet data transmission may comprise source-coding the packet data transmission.

The performing of the packet data transmission may comprise ciphering the respective tunnel of the packet data transmission.

The packet data transmission may comprise Internet Protocol, IP, traffic.

A second aspect of the present disclosure relates to a system for ship-shore packet data transmission. The system comprises off-shore transceiver devices and on-shore transceiver devices, respectively being operable to establish a plurality of ship-shore packet data transmission connections between the off-shore transceiver devices and the on-shore transceiver devices. The system further comprises off-shore and on-shore packet routing devices, respectively being operable to: establish a plurality of mutually independent ship-shore packet data transmission tunnels in accordance with a plurality of traffic classes of the packet data transmission; configure a load balancing for the plurality of packet data transmission tunnels across the plurality of packet data transmission connections; and perform the packet data transmission over the plurality of packet data transmission tunnels in accordance with the configured load balancing. The system is further operable to reconfigure the packet data transmission in response to changing transmission conditions over the plurality of packet data transmission connections.

The system may further be operable to perform the method of the first aspect.

### Advantageous Effects

The disclosed methods and systems provide
- Rule-based traffic classification within classified security domains,
- WAN optimization, such as data compression and TCP enhancement within crypto tunnels,
- synchronized assignment/load balancing of classified services to multiple transmission systems in unclassified security domains on ship and shore sides, under consideration of QoS needs, and
- QoS support and seamless handover between transmission systems during brownout scenarios (i.e., partial failure of packet data transmission).

These advantages equally apply to the method of the first aspect as well as to the system of the second aspect having corresponding features.

### Brief Description of Drawings

The above-described aspects and implementations will now be explained with reference to the accompanying drawings, in which the same or similar reference numerals designate the same or similar elements.

The features of these aspects and implementations may be combined with each other unless specifically stated otherwise.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates a method in accordance with the present disclosure;
- FIG. 2: illustrates a system in accordance with the present disclosure;
- FIG. 3: illustrates another system in accordance with the present disclosure; and
- FIG. 4: illustrates an exemplary plurality of packet data transmission tunnels 4 for the system 2 of FIG. 3.

### Detailed Descriptions of Drawings

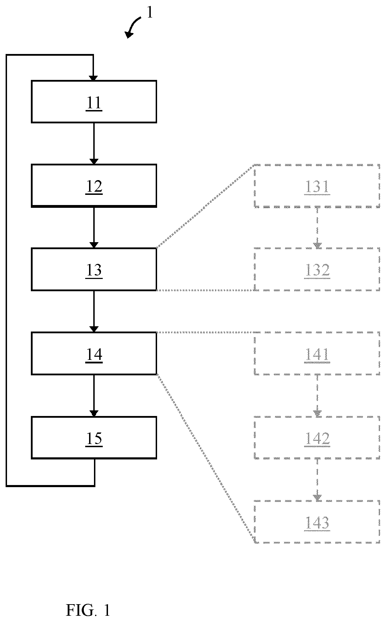

FIG. 1 illustrates a method 1 in accordance with the present disclosure.

The method 1 is suitable for ship-shore packet data transmission.

The packet data transmission may particularly comprise a wireline or wireless packet data transmission.

The packet data transmission may especially comprise Internet Protocol, IP, traffic.

The method 1 comprises a step of establishing 11 a plurality of ship-shore packet data transmission connections 3 between off-shore transceiver devices 21 and on-shore transceiver devices 22.

The method 1 further comprises a step of establishing 12 a plurality of mutually independent ship-shore packet data transmission tunnels 4 in accordance with a plurality of traffic classes of the packet data transmission.

As used herein, a tunnel may refer to an encapsulation by a tunneling protocol for transmission over a network or link. For example, IP traffic may be encapsulated by IP security (IPsec) for encrypted / ciphered transmission, thereby forming an IPsec tunnel between two or multiple endpoints. The encapsulation may comprise an unencrypted outer IP packet header and the encrypted / ciphered original IP packet. In particular, each packet data transmission tunnel 4 corresponds to dedicated QoS class, which is in turn associated with one or more of: an available data rate, a delay (i.e., latency), and a delay variation (i.e., jitter).

The establishing 12 of the plurality of mutually independent ship-shore packet data transmission tunnels 4 may comprise
- inspection of IP packet header information, e.g. source and destination IP address and destination port (e.g., traffic between a client IP host (source IP address) and a webserver (destination IP address) with port 80 or 443 may be recognized as HTTP(S) traffic), or deep packet inspection and heuristics on an application layer (e.g., HTTP or VoIP traffic may be recognized due to their traffic patterns on said application layer).
- tagging of Differentiated Services Code Point (DSCP) values in the IP packet header of the packets of the recognized service, and
- path selection for the packets to the considered crypto tunnel, e.g. BE services being forwarded to the BE crypto tunnel, EF services being forwarded to the EF crypto tunnel, and so on. Note that the number of QoS classes must match the number of crypto tunnels available for the considered QoS domain, e.g. in case of two QoS classes (e.g. BE, EF) there must be two QoS tunnels available, and so on. For example, HTTP traffic may be assigned to a first crypto tunnel (BE) and voice traffic may be assigned to a second crypto tunnel (EF).

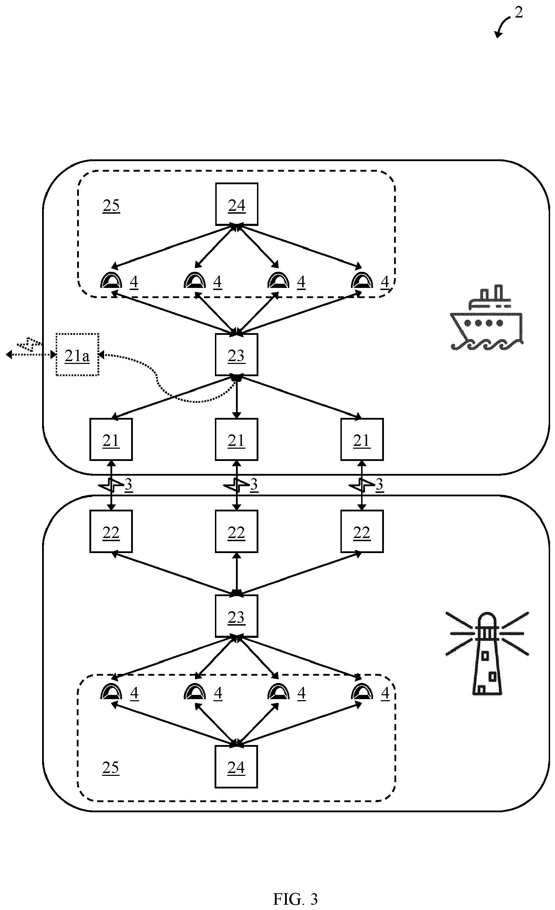

The above-mentioned sub-steps of the establishing 12 of the plurality of mutually independent ship-shore packet data transmission tunnels 4 may particularly be performed by packet routing devices 24 being arranged in classified security domains 25 (see FIG. 3 below).

The method 1 further comprises a step of configuring 13 a load balancing for the plurality of packet data transmission tunnels 4 across the plurality of packet data transmission connections 3.

Load balancing as used herein may refer to a distribution of communication load (i.e., traffic of the ship-shore packet data transmission) over a set of communication resources (i.e., packet data transmission connections 3) in accordance with an optimization objective, such as an even distribution across the available packet data transmission connections 3, or a distribution to the best packet data transmission connections 3 with regard to the respective dedicated QoS class.

Hence, several IP-based packet data transmission connections 3 may be used concurrently by assigning the traffic flows in view of their QoS requirements.

Additionally, different services being assigned to a same transmission connection 3 may be prioritized appropriately by means of QoS-based scheduling.

As a result, the load balancing defines an - adaptive - assignment of the traffic of the packet data transmission tunnels 4 to the available packet data transmission connections 3 making efficient use of the available capacity.

The configuring 13 of the load balancing may comprise
- inspecting an *outer* IP packet header (e.g., source and destination IP addresses of the crypto devices on the ship and shore which set up a crypto tunnel which each other) of the packet data transmission tunnels 4 in the unclassified domain, and
- scheduling of the packets of the packet data transmission tunnels 4 in accordance with their QoS classification, using a dedicated QoS scheduler per packet data transmission connection 3, which assigns the available data rate to the assigned packet data transmission tunnels 4 under consideration of their QoS classification (e.g. BE and EF as defined in the above examples, more if more QoS classes shall be considered). Hence, the packet data transmission tunnel 4 with "highest" QoS requirement is assigned to the "best" packet data transmission connection 3. Various QoS scheduling algorithms may be chosen, such as Weighted Round Robin (WRR).

The configuring 13 of the load balancing may comprise configuring 131 the load balancing for the plurality of packet data transmission tunnels 4 across the plurality of packet data transmission connections 3 in accordance with predetermined rules.

The predetermined rules may take account of one or more of: quality of service, QoS, requirements of the plurality of traffic classes of the packet data transmission, and QoS metrics of the plurality of packet data transmission connections 3.

The QoS requirements of the plurality of traffic classes of the packet data transmission may comprise one or more of: a maximum delay or latency of the respective traffic class, a maximum delay variation or jitter of the respective traffic class, an average bitrate of the respective traffic class, a maximum bitrate of the respective traffic class, and a total quantity of the plurality of traffic classes.

The QoS metrics of the plurality of packet data transmission connections 3 may comprise one or more of: a maximum delay or latency of the respective packet data transmission connection; a maximum delay variation or jitter of the respective packet data transmission connection; an average bitrate of the respective packet data transmission connection; a maximum bitrate of the respective packet data transmission connection; and a total bitrate of the respective set of packet data transmission connections 3.

The load balancing is able to consider the QoS classification of traffic flows originating in the classified security domains 25 within packet routing devices 23 (see below) being arranged in the unclassified security domains, although in the unclassified security domains the traffic of the classified security domains 25 and its QoS classification may be ciphered/encrypted. Since there is no exchange of information between the classified and the unclassified security domains possible/necessary, this is a major achievement.

The configuring 13 of the load balancing may comprise synchronously configuring 132 the load balancing for the respective packet data transmission tunnel 4 across the plurality of packet data transmission connections 3.

Synchronously as used herein may refer to both ends of the respective packet data transmission connection 3. In particular, synchronously configuring 132 the load balancing at both ends of the respective packet data transmission connection 3 may require a keepalive network protocol, such as BFD (see below), to enable a fast failure detection at said both ends.

The above-mentioned sub-steps of the configuring 13 of the load balancing for the plurality of packet data transmission tunnels 4 across the plurality of packet data transmission connections 3 may particularly be performed by packet routing devices 23 being arranged in unclassified security domains (see FIG. 3 below).

The method 1 further comprises a step of performing 14 the packet data transmission over the plurality of packet data transmission tunnels 4 in accordance with the configured load balancing.

The performing 14 of the packet data transmission may comprise classifying 141 the packet data transmission in accordance with the plurality of traffic classes by means of packet inspection.

The classifying 141 may include consistently classifying a particular connection-oriented data flow, such as a TCP flow, of the packet data transmission to a same tunnel of the plurality of packet data transmission tunnels 4, in order to avoid packet loss and effective bitrate reduction due to out-of-sequence packet delivery.

The plurality of traffic classes of the packet data transmission may comprise two or more of: expedite forwarding (EF), assured forwarding (AF), best effort (BE), and scavenger.

The performing 14 of the packet data transmission may comprise source-coding 142 the packet data transmission. Source coding or data compression as used herein may refer to encoding data generated by a data source using fewer bits than the original representation, in particular by removing redundant information.

By compressing traffic before ciphering / encryption the available IP based data rate via the various packet data transmission connections 3 can be utilized much better.

The performing 14 of the packet data transmission may comprise ciphering 143 the respective tunnel of the packet data transmission.

By encrypting the plaintext information / traffic originating in classified security domains 25 into ciphertext information / traffic, only authorized parties can access the original information.

The method 1 further comprises a step of reconfiguring 15 the packet data transmission in response to changing transmission conditions over the plurality of packet data transmission connections 3.

For example, changing transmission conditions may result in changing queue fill levels, changing bit rates, changing receive signal strengths, changing signal-to-noise ratios, changing symbol / bit / packet error rates, changing round-trip times, and the like.

The changing transmission conditions may be detected concurrently or subsequently to performing 14 the packet data transmission.

Thereby, QoS support and seamless handover may be achieved during brownout scenarios (i.e., partial failure of the packet data transmission connections 3) or during degradation of the transmission quality of the packet data transmission connections 3. An adaptive packet data transmission may result from consistent reconfiguration 15 of the packet data transmission upon changing transmission conditions.

In particular, the reconfiguring 15 may include continuing the packet data transmission over the plurality of packet data transmission connections 3 in spite of changed transmission conditions in order to let particular connection-oriented data flows, such as TCP flows, lapse / phase out.

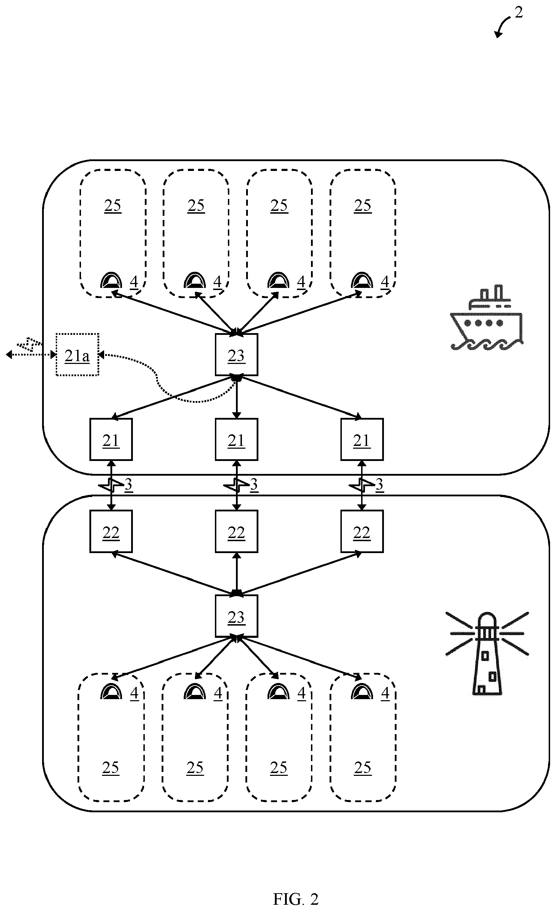

FIG. 2 illustrates a system 2 in accordance with the present disclosure.

The system 2 is suitable for ship-shore packet data transmission in the context of a maritime mobile service. As such, the system 2 may be operable to perform the method 1 of the first aspect or any of its implementations.

A maritime mobile service as used herein may refer to a mobile communication service between shore stations and ship stations, in particular.

FIG. 2 shows a ship side of the system 2 at its top, enclosed by a solid perimeter line and identified by a ship symbol, as well as a shore side of the system 2 at its bottom, enclosed by a solid perimeter line and identified by a lighthouse symbol.

The system 2 comprises off-shore transceiver devices 21 and on-shore transceiver devices 22.

Off-shore as used herein may relate to the ship side of the system 2, whereas on-shore as used herein may relate to the shore side of the system 2.

Without loss of generality, the off-shore transceiver devices 21 and on-shore transceiver devices 22 shown in FIG. 2 are indicated as facing each other (e.g., line-of-sight communication). They are operable to establish 11 a plurality of ship-shore packet data transmission connections 3 between the off-shore and on-shore transceiver devices 21, 22.

A respective packet data transmission connection 3 is indicated between corresponding pairs of off-shore and on-shore transceiver devices 21, 22, wherein corresponding pair means being compatible, and more specifically being based on a same transmission technology. In other words, corresponding pairs of transceiver devices 21, 22 are generally capable of demodulating the packet data transmissions amongst them. Without loss of generality, said corresponding pairs may be based on a cellular communication service, a very-small-aperture terminal, VSAT, based satellite communication service, a super high frequency, SHF, based satellite communication service, a low earth orbit, LEO, satellite communication service such as Starlink, or a geostationary earth (or equatorial) orbit, GEO, satellite communication service such as Inmarsat, for example.

A transceiver device as used herein may refer to a co-located pair of a transmitter device and a receiver device.

Additionally, the ship side of the system 2 may have a ship-ship (federation) communication system21a which offers the ability to communicate directly within a federation in a line-of-sight manner.

On both sides of the system 2, respective classified security domains 25 are indicated by dashed perimeter lines.

A classified security domain as used herein may refer to a domain wherein classified information / traffic to be transmitted is accessible.

In accordance with FIG. 2, one or more classified security domains 25 are assumed. On the ship side, this involves a ship-local classified security domain 25 and respective classified security domains 25 of the federation.

Outside of the dashed perimeter lines but within the solid lines, both sides of the system 2 include unclassified security domains. An unclassified security domain as used herein may refer to a domain wherein classified information / traffic to be transmitted is inaccessible, e.g. due to ciphering / encryption.

The system 2 further comprises off-shore and on-shore packet routing devices 23 being arranged in the unclassified security domains (i.e., not forming part of any of the classified security domains 25).

A packet routing device as used herein may refer to a device being operable to forward data packets between computer networks in accordance with network state information being provided by and exchanged between the participating packet routing devices. Without loss of generality, a packet routing device may comprise an Internet Protocol, IP, router. The respective packet routing device 23 may include an IP router and a separate control device having a decision-making logic for controlling the IP router.

The packet routing devices 23 may respectively be operable to establish 12 a plurality of mutually independent ship-shore packet data transmission tunnels 4 in accordance with a plurality of traffic classes of the packet data transmission. Endpoints of the tunnels 4 are indicated as symbolic tunnel entries being exposed to respective security domains.

The traffic of a classified security domain 25 is forwarded to its single encryption device (not shown). Each encryption device is linked to a single encrypted tunnel 4 (e.g. IPSec) with a corresponding encryption device (not shown) on the shore site.

Between corresponding encryption devices, the respective tunnel 4 can be recognized by analyzing the communication socket (source and destination port, source and destination IP address). As a result, the respective packet routing device 23 in the unclassified security domain can tag the traffic flow of each domain QoS tag, and may be operable to route/switch/forward packet data originating from the respective classified security domain 25 as well as from the respective unclassified security domain (not shown in FIG. 2).

Traffic Flows of each security domain can get a QoS tag and QoS scheduling can only be performed by considering the whole traffic of each security domain. Various security domains can be prioritized against each other.

Additionally, the packet routing devices 23 being arranged in the unclassified security domains may respectively be operable to: configure 13 a load balancing for the plurality of packet data transmission tunnels 4 across the plurality of packet data transmission connections 3; and perform 14 the packet data transmission over the plurality of packet data transmission tunnels 4 in accordance with the configured load balancing.

The packet routing devices 23 in the unclassified security domains are directly connected with all IP-based transmission systems 21, 22 (e.g. with a direct connection cable or by means of VLANs within the unclassified network). The available data rate of the respective packet data transmission connection 3 may be configured within the QoS schedulers of the packet routing devices 23. Additionally, a fraction of the available data rate may be reserved for prioritized traffic. In case this reserved fraction is not used it may be assigned to unprioritized traffic. Additionally, default settings assign traffic flows to appropriate transmission systems 21, 22 by means of routes being monitored by a keepalive mechanism of a routing protocol, such as OSPF Hello or IS-IS Hello, or a separate keepalive network protocol, such as Bidirectional Forwarding Detection (BFD). Those routes are only part of the routing table as long as the considered transmission system 21, 22 establishes a connection to the remote site. In parallel, a process of the routing protocol may analyze all available paths and define a fallback path for all traffic flows if the corresponding primary path fails (i.e., brownout).

In response to changing transmission conditions over the plurality of packet data transmission connections 3, the system 2 is operable to reconfigure 15 the packet data transmission. Basically, this may involve re-starting the packet data transmission from step 11.

A transmission condition as used herein may refer to an impact of external factors such as distance, attenuation, reflection, noise and the like on a transmission performance.

FIG. 3 illustrates another system 2 in accordance with the present disclosure.

When using the load balancing mechanism described previously, it is possible to use all available transmission systems 21, 22 concurrently due to load balancing in the unclassified area. But with this solution, one problem is still not solved: Within each security domain a bunch of services is hosted, which have different QoS requirements, but all different traffic flows of all these services are assigned to a single crypto device. This crypto device inserts all classified traffic flows in one encrypted tunnel and as a result a single encrypted traffic flow is sent out via the unclassified network. Hence, the load balancing in the unclassified network cannot differentiate between the services with respect to their different QoS requirements. It is only possible to prioritize the complete tunnel under consideration of its QoS tag within the unclassified area, as long as the QoS tags are not fed through by the crypto device. During an overload situation all services with low delay and jitter requirements may suffer within this tunnel. However, if the QoS tags are fed through (which is rarely the case and in particular less likely for high levels of classification) then each tunnel may be routed in accordance with its own QoS classification, so that no policy routing is needed, the rules of which do not form part of the normal routing table and are complex to assess and manage. In comparison, a physical separation of crypto devices per QoS class is simpler to assess and manage.

Therefore, the system 2 of FIG. 3 differs from the one illustrated in FIG. 2 in that it involves a plurality of packet data transmission tunnels 4 per security domain.

More specifically, several ship-shore crypto tunnels 4 may be established between classified security domains 25. Services may thus be assigned to different crypto tunnels 4. Their QoS classification can be considered in the load balancer of the unclassified area, and QoS classes of various security domains can be prioritized against each other.

To be compatible to all classes of encryption devices, a single crypto tunnel for a single crypto device may be supported by default. In this case, technically the involved routing tables are concurrently manipulated by static rules which are supervised by a Bidirectional Forwarding Detection (BFD) session. The static route is only established if the remote gateway is reachable. Due to a smaller administrative distance of the static BFD route compared to the dynamically learned OSPF route, the BFD route is used as long as the remote gateway is reachable. If not, the BFD route vanishes and the dynamically learned OSPF route may be used, which represents the still best available transmission system 21, 22 in a brownout scenario. For both directions ship-shore and shore-ship, only a destination IP address is used in order to assign the crypto tunnel to the correct transmission system 21, 22 and hence for each tunnel 4 a dedicated source destination relationship is needed.

For an efficient load balancing, not necessarily multiple encryption devices must be used. For example, the crypto devices may set up multiple encryption tunnels from a single device.

In general, it is also possible to use multiple tunnels from a single crypto device. But in this case a value must be identified which might be set in the crypto tunnels IP header in order to differ between the tunnels. If such a value can be recognized for policy-based routing, such a solution is possible, too. Such a policy-based routing solution must be extended by a supervision based on SLA (Service Level Agreement) policies to identify which transmission systems 21, 22 are usable and which aren't. Additionally, with policy-based routing there exists one major disadvantage: policy-based routes are not shown in the normal routing table and hence fault clearance may be more difficult.

The system 2 may further comprise off-shore and on-shore packet routing devices 24 being arranged in the classified security domains 25.

Given that each tunnel 4 represents a QoS class, these packet routing devices 24 within the classified security domain 25 are configured to classify the encrypted streams according to a fixed rule by analyzing the sockets of the traffic flows which are originated by the crypto devices. Hence, all traffic assigned to the first socket may be classified as Expedited Forwarding (EF), all traffic assigned to the second traffic flow may be classified as Best Effort (BE)... and so on. The packet routing devices 24 in the classified security domains are further configured to perform packet inspection and to classify the traffic (e.g. by analyzing the used protocols) and to forward the traffic according to the classification to the correct crypto device, which is tagged in the appropriate way in the unclassified area.

Hence, by ensuring a complementary configuration for the classification by the packet routing devices 23 in the unclassified security domains and for the assignment of traffic by the packet routing devices 24 in the classified security domains it is possible to consider the QoS needs of the classified traffic flows within the unclassified area.

The packet routing devices 24 in the classified security domains may further be configured to perform WAN Optimization, e.g. source coding (i.e., compression) or TCP Enhancement, before encryption.

WAN optimization as used herein may refer to a collection of techniques for improving data transfer across a wide area network (WAN).

TCP enhancement as used herein may refer to WAN optimization specifically dealing with improving the end-to-end throughput of the TCP protocol.

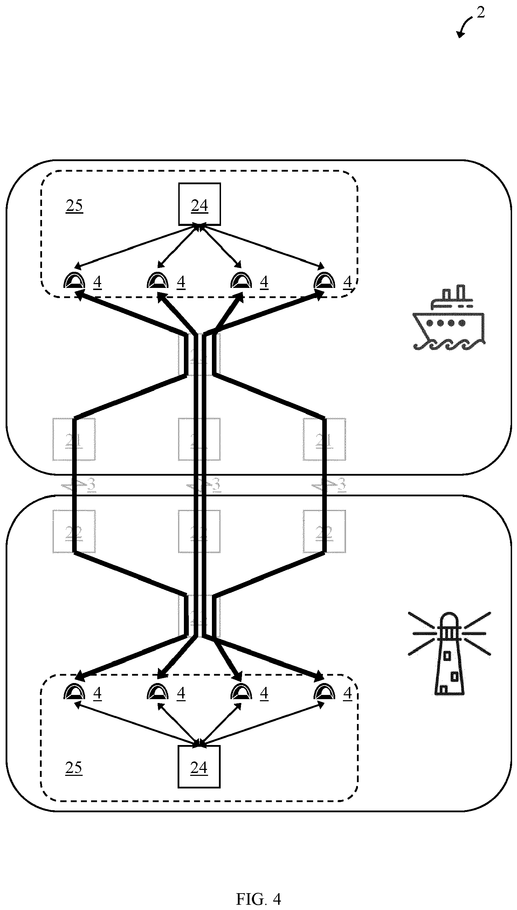

For a better understanding, FIG. 4 illustrates an exemplary plurality of packet data transmission tunnels 4 indicated by thick solid lines for the system 2 of FIG. 3.

## Claims

1. A method (1) for a ship-shore packet data transmission, the method (1) comprising
- establishing (11) a plurality of ship-shore packet data transmission connections (3) between off-shore transceiver devices (21) and on-shore transceiver devices (22);
- establishing (12) a plurality of mutually independent ship-shore packet data transmission tunnels (4) in accordance with a plurality of traffic classes of the packet data transmission;
- configuring (13) a load balancing for the plurality of packet data transmission tunnels (4) across the plurality of packet data transmission connections (3);
- performing (14) the packet data transmission over the plurality of packet data transmission tunnels (4) in accordance with the configured load balancing; and
- reconfiguring (15) the packet data transmission in response to changing transmission conditions over the plurality of packet data transmission connections (3).

2. The method (1) of claim 1,
wherein the configuring (13) of the load balancing comprises
- configuring (131) the load balancing for the plurality of packet data transmission tunnels (4) across the plurality of packet data transmission connections (3) in accordance with predetermined rules.

3. The method (1) of claim 2,
wherein the configuring (13) of the load balancing comprises
- synchronously configuring (132) the load balancing for the respective packet data transmission tunnel across the plurality of packet data transmission connections (3).

4. The method (1) of claim 2 or claim 3,
wherein the predetermined rules take account of one or more of:
- quality of service, QoS, requirements of the plurality of traffic classes of the packet data transmission, and
- QoS metrics of the plurality of packet data transmission connections (3).

5. The method (1) of any one of the claims 2 to 4,
wherein the QoS requirements of the plurality of traffic classes of the packet data transmission comprise one or more of:
- a maximum delay or latency of the respective traffic class,
- a maximum delay variation or jitter of the respective traffic class,
- an average bitrate of the respective traffic class,
- a maximum bitrate of the respective traffic class, and
- a total quantity of the plurality of traffic classes.

6. The method (1) of any one of the claims 2 to 5,
wherein the QoS metrics of the plurality of packet data transmission connections (3) comprise one or more of:
- a maximum delay or latency of the respective packet data transmission connection;
- a maximum delay variation or jitter of the respective packet data transmission connection;
- an average bitrate of the respective packet data transmission connection;
- a maximum bitrate of the respective packet data transmission connection; and
- a total bitrate of the respective set of packet data transmission connections (3).

7. The method (1) of any one of the preceding claims,
wherein the performing (14) of the packet data transmission comprises
- classifying (141) the packet data transmission in accordance with the plurality of traffic classes by means of packet inspection.

8. The method (1) of claim 7,
wherein the plurality of traffic classes of the packet data transmission comprises two or more of:
- expedite forwarding, EF,
- assured forwarding, AF,
- best effort, BE, and
- scavenger.

9. The method (1) of claim 7 or claim 8,
wherein the performing (14) of the packet data transmission comprises
- source-coding (142) the packet data transmission.

10. The method (1) of any one of the claims 7 to 9,
wherein the performing (14) of the packet data transmission comprises
- ciphering (143) the respective tunnel of the packet data transmission.

11. The method (1) of any one of the preceding claims,
wherein the packet data transmission comprises Internet Protocol, IP, traffic.

12. A system (2) for a ship-shore packet data transmission, the system (2) comprising
- off-shore and on-shore transceiver devices (21, 22), respectively being operable to
establish (11) a plurality of ship-shore packet data transmission connections (3) between the off-shore transceiver devices (21) and the on-shore transceiver devices (22);
- off-shore and on-shore packet routing devices (23, 24), respectively being operable to
establish (12) a plurality of mutually independent ship-shore packet data transmission tunnels (4) in accordance with a plurality of traffic classes of the packet data transmission;
configure (13) a load balancing for the plurality of packet data transmission tunnels (4) across the plurality of packet data transmission connections (3); and
perform (14) the packet data transmission over the plurality of packet data transmission tunnels (4) in accordance with the configured load balancing;
wherein the system (2) is further operable to reconfigure (15) the packet data transmission in response to changing transmission conditions over the plurality of packet data transmission connections (3).

13. The system (2) of claim 12, further being operable to
perform the method (1) of any one of the claims 2 to 11.
